# FASCICULE DE BREVET EUROPEEN

(11) **EP 0 565 424 B1**
(45) Date de publication et mention de la délivrance du brevet: **27.12.1996**
(21) Numéro de dépôt: 93400879.8
(22) Date de dépôt: 05.04.1993
(51) Int. Cl.: C08L 23/04, C08L 27/12, H01B 3/44

(54) **Matériau synthétique, notamment pour l'isolation électrique des câbles d'énergie haute-tension**
Kunststoff zur Isolierung von Hochspannungskabeln
Plastic material for the electrical insulation of high tension cables

(30) Priorité: 06.04.1992 FR 9204175
(43) Date de publication de la demande: 13.10.1993
(73) Titulaire: ALCATEL CABLE, F-92100 Clichy (FR)
(72) Inventeur: Barraud, Jean-Yves, F-75010 Paris (FR); Gervat, Sophie, F-78340 Les Clayes Sous Bois (FR); Boutevin, Bernard, F-34000 Montpellier (FR); Parisi, Jean-Pierre, F-34090 Montpellier (FR); Parasie, Yves, F-62100 Calais (FR)
(74) Mandataire: Laroche, Danièle

(56) Documents cités:
- EP-A- 0 422 960
- WO-A-88/07063
- GB-A- 2 180 544
- DATABASE WPIL Section Ch, Week 8414, Derwent Publications Ltd., London, GB; Class A92, AN 84-085114

## Description

La présente invention concerne un matériau synthétique notamment mais non exclusivement pour l'isolation électrique des câbles d'énergie haute-tension en courant continu.

Le transport d'énergie par câbles sous-marins en courant continu présente plusieurs avantages (puissance élevée et faibles pertes électriques) par rapport au transport par câbles en courant alternatif, lorsque les distances atteignent ou dépassent 50 km.

Les câbles utilisés actuellement pour le courant continu sont isolés par du papier imprégné d'huile fluide ou faiblement visqueuse. Cette technologie est fiable mais reste d'utilisation peu aisée, tant en raison des conditions de réalisation que d'exploitation (poids, gainage de plomb, etc...).

Les matériaux isolants synthétiques, largement utilisés pour les câbles en courant alternatif, sont attrayants et justifient des études entreprises depuis vingt-cinq ans. Les principaux matériaux macromoléculaires utilisés en câblerie haute-tension alternative sont les polyéthylènes, réticulés ou non, et les caoutchouc type EPR (Ethylène Propylène Rubber). Aujourd'hui aucun câble à isolation synthétique extrudée n'est commercialisé pour le courant continu haute-tension en raison des charges d'espace induites par la haute-tension continue qui peuvent provoquer localement des augmentations importantes de champ électrique et conduire à des claquages. Dans le cas des câbles sous-marins, les propriétés hydrophobes de l'isolant peuvent être importantes pour limiter le phénomène de migration ionique.

La présente invention a pour but de réaliser un matériau synthétique d'isolation, qui soit extrudable, qui présente de bonnes qualités d'isolement, de bonnes propriétés mécaniques, qui soit stable dans le temps, et dont les propriétés d'hydrophobie soient meilleures que celles des matériaux connus, en particulier pour l'isolement des câbles sous-marins haute-tension en courant continu.

La présente invention a pour objet un matériau synthétique, notamment pour l'isolation électrique des câbles d'énergie haute-tension en courant continu, caractérisé par le fait qu'il est constitué d'un mélange comportant:
- un premier polymère choisi parmi les polystyrènes et leurs copolymères, et les polyoléfines, telles que les polyéthylènes, les polypropylènes, et leurs copolymères,
- un copolymère, dont au moins un premier monomère constitutif est susceptible d'assurer la compatibilité de ce copolymère avec ledit premier polymère, et dont au moins un second monomère constitutif est choisi parmi un éther vinylique fluoré et un ester vinylique fluoré, la proportion dudit copolymère dans le mélange étant comprise entre 1 % et 20 % en poids dudit premier polymère.

De préférence, le fluor dudit second monomère est porté par une chaîne latérale de longueur variable partiellement perfluorée.

Selon une première variante, ledit second monomère est choisi parmi les éthers vinyliques fluorés de formule générale:

H₂C=CH-O-(CH₂)ₙ-R_{f}

avec n=1 ou 2,
où -R_{f} est -CₘF₂ₘ₊₁, -(CF₂)ₘ-H, 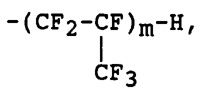 avec m=1 à 20.

Selon une seconde variante, ledit second monomère est choisi parmi les esters vinyliques fluorés de formule générale: 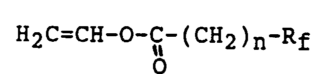 avec n=1 ou 2,
où -R_{f} est -CₘF₂ₘ₊₁, -(CF₂)ₘ-H, 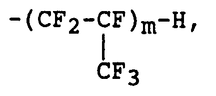 avec m=1 à 20.

Selon un premier mode de réalisation, ledit premier polymère est choisi parmi les polyéthylènes et leurs copolymères, et ledit copolymère est un copolymère d'éthylène et d'éther vinylique fluoré.

Selon un second mode de réalisation, ledit premier polymère est choisi parmi les polypropylènes et leurs copolymères, et ledit copolymère est un copolymère de propylène et d'éther vinylique fluoré.

Selon un troisième mode de réalisation, ledit premier polymère est choisi parmi les polystyrènes et leurs copolymères, et ledit copolymère est un copolymère de styrène et d'éther vinylique fluoré.

Selon un mode de réalisation préférentiel, ledit mélange comporte en outre un second polymère, incompatible avec ledit premier polymère, dans une proportion inférieure à 40 % en poids dudit mélange, ledit copolymère étant compatible avec ledit second polymère, ce dernier étant choisi parmi les polymères fluorés tels que les polytétrafluoroéthylènes (PTFE), les polyfluorures de vinylidène (PVDF), et leurs copolymères alternés.

De préférence on pourra utiliser comme second polymère les copolymères de l'éthylène et du tétrafluoroéthylène (ETFE), comme le "TEFZEL®" de la société DU PONT DE NEMOURS, les copolymères de l'éthylène et du trifluorochloroéthylène (TFCE), comme le "HALAR®" de la société ALLIED SIGNAL, et les copolymères du propylène et du tétrafluoroéthylène, comme le "AFLAS®" de la société JAPAN SYNTHETIC RUBBER.

Ledit matériau formé par ledit premier, ledit second et ledit copolymère compatibilisant sera appelé ci-après "alliage de polymères".

Ledit copolymère peut être un copolymère séquencé dibloc ou tribloc, dont un premier bloc est constitué par des motifs monomères compatibles avec ceux dudit premier polymère, et dont un second bloc est constitué par des motifs monomères identiques à ceux dudit second polymère.

Ledit copolymère peut être également obtenu par réaction chimique de greffage de molécules dudit premier/ou dudit second polymère, sur une chaine macromoléculaire compatible avec ledit second/ou ledit premier polymère.

Ce greffage peut être aussi réalisé au moment du mélange des divers constituants.

Ledit second polymère qui constitue normalement une phase distincte lorsqu'il est en mélange avec ledit premier polymère, est choisi fusible ou soluble dans un solvant du premier polymère, de façon à pouvoir être mis en mélange avec ce premier polymère et ledit copolymère.

De façon préférentielle, le mélange est assuré à l'état fondu à une température telle que chacun des constituants soient visqueux. Ces constituants doivent être thermiquement stables aux températures utilisées pour la préparation de l'alliage de polymères ou pour son extrusion.

Selon une première variante d'alliage de polymères selon l'invention, ledit premier polymère est un polyéthylène, ou un de ses copolymères, ledit second polymère est un polytétrafluoréthylène et ledit copolymère est un copolymère d'éthylène et d'éther vinylique fluoré.

Selon une seconde variante d'alliage selon l'invention, ledit premier polymère est un polypropylène, ou un de ses copolymères, ledit second polymère est un polyfluorure de vinylidène et ledit copolymère est un copolymère de propylène et d'éther vinylique fluoré.

Selon une troisième variante d'alliage selon l'invention, ledit premier polymère est un polystyrène ou un de ses copolymères, ledit second polymère est un polyfluorure de vinylidène et ledit copolymère est un copolymère de styrène et d'éther vinylique fluoré.

L'alliage de polymères selon l'invention est thermoplastique, donc aisément extrudable, et pas nécessairement réticulé chimiquement. Sa propriété d'hydrophobie est stable dans le temps et il possède les mêmes qualités mécaniques et électriques que ledit premier polymère.

D'autres caractéristiques et avantages de la présente invention apparaîtront à la lecture des exemples de réalisation donné ci-dessous.

### EXEMPLE 1

On réalise un matériau comportant comme premier polymère du polyéthylène et comme copolymère la composition obtenue de la manière suivante :
- 0,5 % d'oxyde de chrome sur alumine (catalyseur) sont dissous dans la cyclohexanone,
- de l'éthylène, substitué à 50 % en masse par l'éther vinylique perfluoré, est dissous dans la cyclohexanone dans la proportion 5 pour 95,
- la réaction est conduite à 100°C sous 10 bars pendant 16 heures.

Enfin, l'évaporation du solvant fournit le copolymère.

On mélange alors le premier polymère avec 10% du copolymère.

### EXEMPLE 2

On réalise un matériau comportant comme premier polymère du polyéthylène et comme copolymère la composition obtenue de la manière suivante :
- 0,5 % d'oxyde de chrome sur alumine (catalyseur) sont dissous dans la cyclohexanone,
- de l'éthylène, substitué à 50 % en masse par l'ester vinylique perfluoré, est dissous dans la cyclohexanone dans la proportion 5 pour 95,
- la réaction est conduite à 100°C sous 10 bars pendant 16 heures.

Enfin, l'évaporation du solvant fournit le copolymère.

On mélange alors le premier polymère avec 10% du copolymère.

Bien entendu l'invention n'est pas limitée au mode de réalisation qui vient d'être décrit. On pourra, sans sortir du cadre de l'invention, remplacer tout moyen par un moyen équivalent.

## Revendications

1. Matériau synthétique, notamment pour l'isolation électrique des câbles d'énergie haute-tension en courant continu, caractérisé par le fait qu'il est constitué d'un mélange comportant
- un premier polymère choisi parmi les polystyrènes et leurs copolymères, et les polyoléfines telles que les polyéthylènes, les polypropylènes, et leurs copolymères,
- un copolymère, dont au moins un premier monomère constitutif est susceptible d'assurer la compatibilité de ce copolymère avec ledit premier polymère, et dont au moins un second monomère constitutif est choisi parmi un éther vinylique fluoré et un ester vinylique fluoré, la proportion dudit copolymère dans le mélange étant comprise entre 1 % et 20 % en poids dudit premier polymère.

2. Matériau selon la revendication 1, caractérisé par le fait que le fluor dudit second monomère est porté par une chaîne latérale de longueur variable partiellement perfluorée.

3. Matériau selon la revendication 2, caractérisé par le fait que ledit second monomère est choisi parmi les éthers vinyliques fluorés de formule générale:
H₂C=CH-O-(CH₂)ₙ-R_{f}
avec n=1 ou 2,
où -R_{f} est -CₘF₂ₘ₊₁, -(CF₂)ₘ-H, 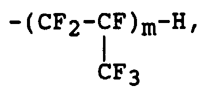 avec m=1 à 20.

4. Matériau selon la revendication 2, caractérisé par le fait que ledit second monomère est choisi parmi les esters vinyliques fluorés de formule générale: 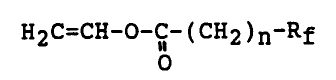 avec n=1 ou 2,
où -R_{f} est -CₘF₂ₘ₊₁, -(CF₂)ₘ-H, 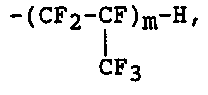 avec m=1 à 20.

5. Matériau selon l'une des revendications 1 à 3, caractérisé par le fait que ledit premier polymère est choisi parmi les polyéthylènes et leurs copolymères, et que ledit copolymère est un copolymère d'éthylène et d'éther vinylique fluoré.

6. Matériau selon l'une des revendications 1 à 3, caractérisé par le fait que ledit premier polymère est choisi parmi les polypropylènes et leurs copolymères, et que ledit copolymère est un copolymère de propylène et d'éther vinylique fluoré.

7. Matériau selon l'une des revendications 1 à 3, caractérisé par le fait que ledit premier polymère est choisi parmi les polystyrènes et leurs copolymères, et que ledit copolymère est un copolymère de styrène et d'éther vinylique fluoré.

8. Matériau selon l'une des revendications 1 et 2, caractérisé par le fait que ledit mélange comporte en outre un second polymère, incompatible avec ledit premier polymère, dans une proportion inférieure à 40 % en poids dudit mélange, ledit copolymère étant compatible avec ledit second polymère, ce dernier étant choisi parmi les polymères fluorés tels que les polytétrafluoroéthylènes, les polyfluorures de vinylidène, et leurs copolymères alternés.

9. Matériau selon la revendication 8, caractérisé par le fait que ledit second polymère est choisi parmi les copolymères de l'éthylène et du tétrafluoroéthylène, les copolymères de l'éthylène et du trifluorochloroéthylène, et les copolymères du propylène et du tétrafluoroéthylène.

10. Matériau selon la revendication 1 à 3 et 5 à 8, caractérisé par le fait que ledit premier polymère est choisi parmi les polyéthylènes et leurs copolymères, ledit second polymère est un polytétrafluoréthylène et ledit copolymère est un copolymère d'éthylène et d'éther vinylique fluoré.

11. Matériau selon la revendication 1 à 3 et 5 à 8, caractérisé par le fait que ledit premier polymère est choisi parmi les polypropylènes et leurs copolymères, ledit second polymère est un polyfluorure de vinylidène et ledit copolymère est un copolymère de propylène et d'éther vinylique fluoré.

12. Matériau selon la revendication 1 à 3 et 5 à 8, caractérisé par le fait que ledit premier polymère est choisi parmi les polystyrènes et leurs copolymères, ledit second polymère est un polyfluorure de vinylidène et ledit copolymère est un copolymère de styrène et d'éther vinylique fluoré.

## Patentansprüche

1. Kunststoffmaterial, insbesondere für die elektrische Isolierung von Hochspannungs-Gleichstromkabeln, dadurch gekennzeichnet, daß es von einer Mischung gebildet wird, die enthält:
- ein erstes Polymer, das unter Polystyrol und dessen Copolymeren und den Polyolefinen ausgewählt wird, wie z.B. Polyäthylen, Polypropylen und deren Copolymere,
- ein Copolymer, von dem mindestens ein erstes seiner Monomere die Kompatibilität dieses Copolymers mit dem ersten Polymer gewährleisten kann und mindestens ein zweites seiner Monomere unter fluoriertem Vinyläther und fluoriertem Vinylester ausgewählt wird, wobei der Anteil des Copolymers an der Mischung zwischen 1% und 20% (Gew.%) des ersten Polymers beträgt.

2. Material nach Anspruch 1, dadurch gekennzeichnet, daß das Fluor des zweiten Monomers an einer teilweise perfluorierten Seitenkette variabler Länge hängt.

3. Material nach Anspruch 2, dadurch gekennzeichnet, daß das zweite Monomer unter den fluorierten Vinyläthern der folgenden allgemeinen Formel ausgewählt wird:
H₂C=CH-O-(CH₂)ₙ-R_{f}
mit n=1 oder 2
wobei -R_{f} steht für -CₘF₂ₘ₊₁, -(CF₂)ₘ-H, 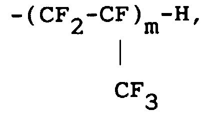 und m zwischen 1 und 20 liegt.

4. Material nach Anspruch 2, dadurch gekennzeichnet, daß das zweite Monomer unter den fluorierten Vinylestern der folgenden allgemeinen Formel ausgewählt wird: 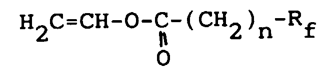 mit n=1 oder 2
wobei -R_{f} steht für -CₘF₂ₘ₊₁, 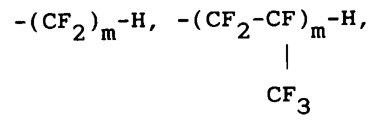 und m zwischen 1 und 20 liegt.

5. Material nach einem der Ansprüche 1 bis 3, dadurch gekennzeichnet, daß das erste Polymer unter Polyäthylen und dessen Copolymeren ausgewählt wird und daß das Copolymer ein Copolymer aus Äthylen und fluoriertem Vinyläther ist.

6. Material nach einem der Ansprüche 1 bis 3, dadurch gekennzeichnet, daß das erste Polymer unter Polypropylen und dessen Copolymeren ausgewählt wird und daß das Copolymer aus Propylen und fluoriertem Vinyläther besteht.

7. Material nach einem der Ansprüche 1 bis 3, dadurch gekennzeichnet, daß das erste Polymer unter Polystyrol und dessen Copolymeren ausgewählt wird und daß das Copolymer aus Styrol und fluoriertem Vinyläther besteht.

8. Material nach einem der Ansprüche 1 und 2, dadurch gekennzeichnet, daß die Mischung außerdem ein zweites Polymer enthält, das mit dem ersten Polymer inkompatibel ist, und zwar mit einem Anteil von weniger als 40 Gew.% in der Mischung, wobei das Copolymer mit dem zweiten Polymer kompatibel ist und letzteres unter den fluorierten Polymeren wie z.B. Polytetrafluoräthylen, Polyvinylidenfluorid und deren abwechselnden Copolymeren ausgewählt wird.

9. Material nach Anspruch 8, dadurch gekennzeichnet, daß das zweite Polymer unter den Copolymeren von Äthylen und Tetrafluoräthylen, den Copolymeren von Äthylen und Trifluorchloräthylen und den Copolymeren von Propylen und Tetrafluoräthylen ausgewählt wird.

10. Material nach Anspruch 1 bis 3 und 5 bis 8, dadurch gekennzeichnet, daß das erste Polymer unter Polyäthylen und dessen Copolymeren ausgewählt wird, während das zweite Polymer ein Polytetrafluoräthylen ist und das Copolymer aus Äthylen und fluoriertem Vinyläther besteht.

11. Material nach Anspruch 1 bis 3 und 5 bis 8, dadurch gekennzeichnet, daß das erste Polymer unter Polypropylen und dessen Copolymeren ausgewählt wird, während das zweite Polymer ein Polyvinylidenfluorid ist und das Copolymer aus Propylen und fluoriertem Vinyläther besteht.

12. Material nach Anspruch 1 bis 3 und 5 bis 8, dadurch gekennzeichnet, daß das erste Polymer unter Polystyrol und dessen Copolymeren ausgewählt wird, während das zweite Polymer ein Polyvinylidenfluorid ist und das Copolymer aus Styrol und fluoriertem Vinyläther besteht.

## Claims

1. A synthetic material, in particular for the electrical insulation of high voltage direct current cables, characterized in that it is constituted by a mixture comprising:
• a first polymer selected from polystyrenes and copolymers thereof and from polyolefins such as polyethylenes or polypropylenes and copolymers thereof;
• a copolymer, in which at least a first constituent monomer ensures the compatibility of the copolymer with said first polymer, and in which at least a second constituent monomer is selected from a fluorinated vinyl ether and a fluorinated vinyl ester, the proportion of said copolymer in the mixture being in the range 1% to 20% by weight of said first polymer.

2. A material according to claim 1, characterized in that the fluorine in said second monomer is carried by a partially perfluorinated side chain of variable length.

3. A material according to claim 2, characterized in that said second monomer is selected from fluorinated vinyl ethers with general formula:
H₂C=CH-O-(CH₂)ₙ-R_{f}
where n = 1 or 2;
and where
-R_{f} is -CₘF₂ₘ₊₁, -(CF₂)ₘ-H, 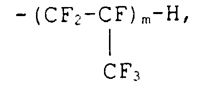 where m = 1 to 20.

4. A material according to claim 2, characterized in that said second monomer is selected from fluorinated vinyl esters with general formula: 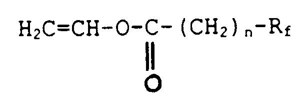 where n = 1 or 2;
and where
-R_{f} is -CₘF₂ₘ₊₁, -(CF₂)ₘ-H, 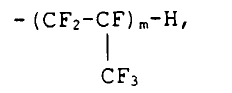 where m = 1 to 20.

5. A material according to any one of claims 1 to 3, characterized in that said first polymer is selected from polyethylenes and copolymers thereof, and said copolymer is a copolymer of ethylene and a fluorinated vinyl ether.

6. A material according to any one of claims 1 to 3, characterized in that said first polymer is selected from polypropylenes and copolymers thereof, and said copolymer is a copolymer of propylene and a fluorinated vinyl ether.

7. A material according to any one of claims 1 to 3, characterized in that said first polymer is selected from polystyrenes and copolymers thereof, and said copolymer is a copolymer of styrene and a fluorinated vinyl ether.

8. A material according to claim 1 or claim 2, characterized in that said mixture further comprises a second polymer, which is incompatible with the first polymer, in a proportion of less than 40% by weight of said mixture, said copolymer being compatible with said second polymer, the latter being selected from fluorinated polymers such as polytetrafluoroethylenes, polyvinylidene fluorides and alternating copolymers thereof.

9. A material according to claim 8, characterized in that said second polymer is selected from copolymers of ethylene and tetrafluoroethylene, copolymers of ethylene and trifluorochloroethylene, and copolymers of propylene and tetrafluoroethylene.

10. A material according to claims 1 to 3 and 5 to 8, characterized in that said first polymer is selected from polyethylenes and copolymers thereof, said second polymer is a polytetrafluoroethylene and said copolymer is a copolymer of ethylene and a fluorinated vinyl ether.

11. A material according to claims 1 to 3 and 5 to 8, characterized in that said first polymer is selected from polypropylenes and copolymers thereof, said second polymer is a polyvinylidene fluoride and said copolymer is a copolymer of propylene and a fluorinated vinyl ether.

12. A material according to claims 1 to 3 and 5 to 8, characterized in that said first polymer is selected from polystyrenes and copolymers thereof, said second polymer is a polyvinylidene fluoride and said copolymer is a copolymer of styrene and a fluorinated vinyl ether.
